# EUROPEAN PATENT APPLICATION

(11) **EP 2 028 820 A2**
(43) Date of publication of application: **25.02.2009**
(21) Application number: 08162634.3
(22) Date of filing: 19.08.2008
(51) Int. Cl.: H04L 29/06

(54) **Method and apparatus for checking round trip based on challenge response as well as computer readable medium having recorded thereon program for the method**

(30) Priority: 13.11.2007 KR 20070115504; 21.08.2007 US 956986 P
(71) Applicant: Samsung Electronics Co., Ltd., Suwon-si, Gyeonggi-do 442-742 (KR)
(72) Inventor: Park, Ji-soon, Gyeonggi-do (KR); Shin, Jun-bum, Gyeonggi-do (KR)
(74) Representative: Brandon, Paul Laurence

(57) **Abstract**

An apparatus and method of checking adjacency between devices are provided. A challenge response based round trip time (RTT) checking method includes: generating a random number; encrypting the random number using a symmetrical key; transmitting a challenge request message including the encrypted random number to a device; receiving a challenge response message including the random number from the device which received the challenge request message and decrypted the encrypted random number using the symmetrical key, from the device; and determining an RTT based on a time when the challenge response message is received and a time when the challenge request message is transmitted.

## Description

### CROSS-REFERENCE TO RELATED PATENT APPLICATION

This application priority from U.S. Provisional Application No. 60/956,986, filed on August 21, 2007 in the U.S. Patent and Trademark Office, and Korean Patent Application No. 10-2007-0115504, filed on November 13, 2007 in the Korean Intellectual Property Office, the disclosures of which are incorporated herein in their entirety by reference.

### BACKGROUND OF THE INVENTION

### 1. Field of the Invention

Methods and apparatuses consistent with the present invention relate to checking adjacency between devices, and more particularly, to a method for checking adjacency between devices by using an RTT measured value.

### 2. Description of the Related Art

With the recent development of an Internet Protocol (IP) network infrastructure, a home network technology of networking devices within a house is attracting much attention. One of the issues of the home network technology is localization, that is, how to determine whether devices in an IP network are physically located within a single house or within different houses. This issue is very important because the localization is a premise for a policy that allows only the devices included in a single house to freely share contents.

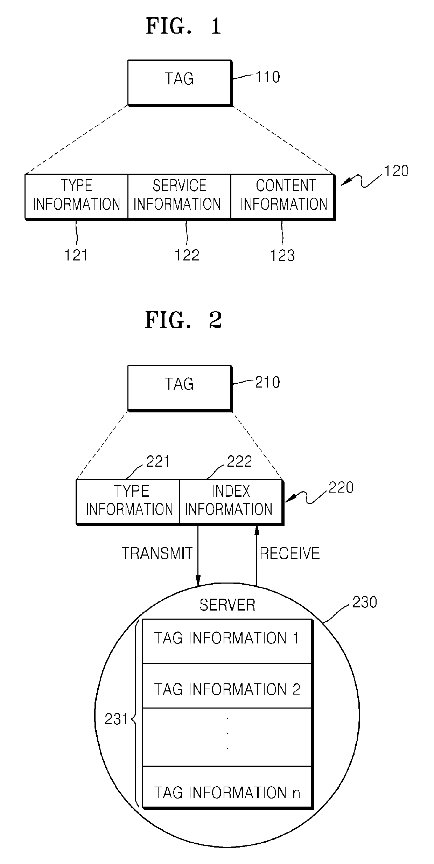

FIG. 1 illustrates a general network environment to which localization is applied. Referring to FIG. 1, a contents provider 110 provides contents to a device A 122 located in a home network 120 of an authorized contents user. The authorized contents user should be able to use not only contents stored in the device A 122 but also contents stored in a device B 124, a device C 126, and a device D 128 that are included in the home network 120. However, the contents provided by the contents provider 110 may not be allowed to flow into a device E 132 located in an external network 130 other than the home network 120. Accordingly, in order to control contents transmission from the device A 122 to other devices, adjacency between the device A 122 and each of the other devices needs to be checked first.

The adjacency check may be performed according to a Round Trip Time (RTT) checking method or a hop count restricting method. In the RTT checking method, a time required for a specific message to make a round trip between devices is measured, and a determination as to whether the measured time is less than or equal to a predetermined period of time is then made. In the hop count restricting method, the number of routers that a specific message can pass through until it reaches a destination device via an IP network is restricted.

Examples of the RTT checking method include an RTT checking protocol of Digital Transmission Content Protection over Internet Protocol (DTCP-IP). The DTCP-IP RTT checking protocol uses a method of exchanging authentication codes between two devices based on a sequence number. In other words, in the authentication code exchanging method, two devices generate message authentication codes (MACs) by using a key value and a sequence number that sequentially increases by 1 from 0, and exchange the MACs with each other. RTT checking is performed by measuring a period of time required to transmit the MACs.

### SUMMARY OF THE INVENTION

Preferred embodiments of the present invention aim to provide a method and apparatus for checking RTT based on a challenge response by using an encryption algorithm in order to efficiently check adjacency between devices, and a computer readable recording medium which records a program for the method.

Preferred embodiments of the present invention aim to provide a method and apparatus for checking an RTT based on a challenge response by using an encryption algorithm, wherein the method is different from an authentication code exchanging method based on a sequence number, and a computer readable recording medium which records a program for the challenge response RTT checking method.

According to an aspect of the present invention, there is provided a challenge response based RTT checking method comprising: generating a random number; encrypting the random number by using a symmetrical key; transmitting a challenge request message including the encrypted random number to a predetermined device; receiving a challenge response message including the encrypted random number decrypted using the symmetrical key, from the predetermined device; and determining an RTT by using a point in time when the challenge response message is received and a point in time when the challenge request message is transmitted.

The encrypting the random number using the symmetrical key may comprise the sub-operations of generating a random number mask by using the symmetrical key and combining the generated random number and the random number mask according to an XOR operation.

The challenge response based RTT checking method may further comprise authenticating the predetermined device by comparing the generated random number with the decrypted random number included in the challenge response message, if the RTT is less than a predetermined time limit.

If the RTT is equal to or greater than the predetermined time limit, generating the random number through the determining of the RTT may be repeated within a predetermined maximum number of repetitions.

The challenge response based RTT checking method may further comprise transmitting a preparation request message to the predetermined device and receiving a preparation response message from the predetermined device.

According to another aspect of the present invention, there is provided a challenge response based RTT checking method comprising: receiving a challenge request message comprising a random number encrypted using a symmetrical key, from a predetermined device; decrypting the encrypted random number by using the symmetrical key; and transmitting a challenge response message comprising the decrypted random number to the predetermined device.

The challenge response based RTT checking method may further comprise, before the receiving the challenge request message, generating a random number mask by using the symmetrical key, wherein the decrypting of the encrypted random number comprises combining the encrypted random number included in the challenge request message with the random number mask according to an XOR operation.

The challenge response based RTT checking method may further comprise receiving the preparation request message from the predetermined device and transmitting the preparation response message from the predetermined device.

According to another aspect of the present invention, there is provided a challenge response based RTT checking apparatus comprising: a random number generation unit generating a random number; an encryption unit encrypting the random number by using a symmetrical key; a communication unit transmitting a challenge request message including the encrypted random number to a predetermined device and receiving a challenge response message including the encrypted random number decrypted using the symmetrical key, from the predetermined device; and an RTT determination unit determining an RTT by using a point in time when the challenge response message is received and a point in time when the challenge request message is transmitted.

According to another aspect of the present invention, there is provided a challenge response based RTT checking apparatus comprising: a communication unit receiving a challenge request message comprising a random number encrypted using a symmetrical key, from a predetermined device; and a decryption unit decrypting the encrypted random number by using the symmetrical key, wherein the communication unit transmits a challenge response message comprising the decrypted random number to the predetermined device.

According to another aspect of the present invention, there is provided a computer recording medium having recorded thereon a program for a challenge response based RTT checking method comprising the operations of: generating a random number; encrypting the random number by using a symmetrical key; transmitting a challenge request message including the encrypted random number to a predetermined device; receiving a challenge response message including the encrypted random number decrypted using the symmetrical key, from the predetermined device; and determining an RTT by using a point in time when the challenge response message is received and a point in time when the challenge request message is transmitted.

According to another aspect of the present invention, there is provided a computer recording medium having recorded thereon a program for a challenge response based RTT checking method comprising the operations of: receiving a challenge request message comprising a random number encrypted using a symmetrical key, from a predetermined device; decrypting the encrypted random number by using the symmetrical key; and transmitting a challenge response message comprising the decrypted random number to the predetermined device.

### BRIEF DESCRIPTION OF THE DRAWINGS

The present invention will become more apparent by describing in detail exemplary embodiments thereof with reference to the attached drawings in which:

FIG. 1 illustrates a general network environment to which localization is applied;

FIG. 2 illustrates a challenge response based RTT checking system according to an exemplary embodiment of the present invention;

FIG. 3 illustrates a challenge response based RTT checking system according to another exemplary embodiment of the present invention;

FIG. 4 illustrates a challenge response based RTT checking system according to another exemplary embodiment of the present invention;

FIG. 5 illustrates a challenge response based RTT checking system according to another exemplary embodiment of the present invention;

FIG. 6 is a functional block diagram of a challenge response based RTT checking apparatus according to an exemplary embodiment of the present invention;

FIG. 7 is a flowchart illustrating a challenge response based RTT checking method according to an exemplary embodiment of the present invention; and

FIG. 8 is a flowchart illustrating a challenge response based RTT checking method according to another exemplary embodiment of the present invention.

### DETAILED DESCRIPTION OF EXEMPLARY EMBODIMENTS OF THE INVENTION

The present invention will now be described more fully with reference to the accompanying drawings, in which exemplary embodiments of the invention are shown.

FIG. 2 illustrates a challenge response based round trip time (RTT) checking system according to an exemplary embodiment of the present invention. Referring to FIG. 2, a device A 205 and a device B 210 share symmetrical keys (SKs) 220 and 225 through a process such as an Authentication and Key Exchange (AKE) operation 215 before RTT checking is executed. Hereinafter, it is assumed that the device A 205 and the device B 210 share the SKs 220 and 225 for use in performing RTT checking. A method of sharing SKs is well known to one of ordinary skill in the art to which the present invention pertains, so a detailed description thereof will be omitted.

Challenge response based RTT checking according to the exemplary embodiment of FIG. 2 is performed according to the following sequence.

When RTT checking starts, although not shown, an RTT checking apparatus may set to 0 a counter N that is installed in the device A 205 in order to indicate the number of times of RTT checking between the device A 205 and the device B 210. The setting of the counter N is repeated a predetermined maximum number of times in consideration of the variability of a traffic of a transmission path such as a network, thereby measuring an RTT. According to the results of several times of measurements of an RTT, if only one of the measured RTTs is within a predetermined critical time, the device A 205 and the device B 210 are considered adjacent to each other.

Thereafter, in operation 230, the device A 205 generates a random number R. Every time the counter N increases, the random number R is changed. In operation 235, the device A 205 encrypts the random number R by using the SK 220.

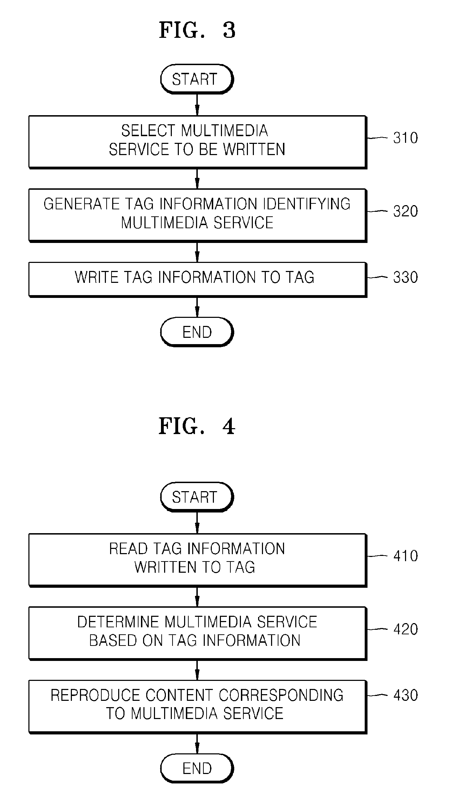

Next, in operations 240 and 245, the device A 205 and the device B 210 transmit and receive a preparation request message RTT_Ready.command and a preparation response message RTT_Ready.response which are used for performing RTT checking. In a modified exemplary embodiment, the operations 240 and 245 may be omitted. This modified exemplary embodiment will be described later with reference to FIG. 4. In another modified exemplary embodiment, the operations 240 and 245 of the device A 205 and the device B 210 transmitting/receiving the preparation request message RTT_Ready.command and the preparation response message RTT_Ready.response may be performed before the operations 230 and 235 of generating the random number R and encrypting the random number R by using the SK 220.

The device A 205 generates a challenge request message RTT_Challenge(E_{SK}(R)) including an encrypted random number E_{SK}(R) that results from the operation 235. Thereafter, in operation 250, the device A 205 starts measurement of the RTT by transmitting the challenge request message RTT_Challenge(E_{SK}(R)) to the device B 210 and simultaneously measuring a point in time when the challenge request message RTT_Challenge(E_{SK}(R)) is transmitted.

The device B 210 parses the challenge request message RTT_Challenge(E_{SK}(R)) in order to obtain the encrypted random number E_{SK}(R). Then, in operation 255, the device B 210 decrypts the encrypted random number E_{SK}(R) using the SK 225. In operation 260, the device B 225 generates a challenge response message RTT_Response(R') including a decrypted random number R' that results from the operation 255, and transmits the challenge response message RTT_Response(R') to the device A 205.

The device A 205 receives the challenge response message RTT_Response(R') including the decrypted random number R' from the device B 210. At the same time, the device A 205 measures a point in time when the challenge response message RTT_Response(R') is received. The device A 205 calculates a period of time ranging from when the device A 205 sends the challenge request message RTT_Challenge(E_{SK}(R)) to the device B 210 and when the device A 205 receives the challenge response message RTT_Response(R') from the device B 210, thereby determining the RTT.

According to this RTT determination based on a challenge response method, when a device A transmits a challenge request message including a random number property to a device B, the device B derives a challenge response message by applying a predetermined arithmetic operation to the received challenge response message, and transmits the challenge response message to the device A. In other words, since the device B can generate the challenge response message only when receiving the challenge request message, it can be found out that the challenge response message is generated after generation of the challenge request message. In addition, since the RTT determination includes the arithmetic operation, which uses a secret value (that is, an SK) pre-shared by the devices A and B, in order to determine the challenge response message, authentication with respect to the device which sends the challenge response message is possible.

Next, in operation 265, the device A 205 determines whether the determined RTT is less than a predetermined time limit (TL). When the determined RTT is less than the predetermined TL, the device A 205 compares the random number R included in the challenge request message RTT_Challenge(E_{SK}(R)) with the decrypted random number R' received from the device B 210 in order to authenticate the device B 210. When the random number R is equal to the random number R', the device A 205 determines that the RTT check is successful. In other words, the device A 205 determines that the device B 210 is adjacent to the device A 205. On the other hand, when the determined RTT is equal to or greater than the TL, the device A 205 increases the counter N by 1. Thereafter, in operation 275, the device A 205 determines whether the value of the counter N has reached a maximum number of repetitions N_{MR}. The maximum number of repetitions is predefined in consideration of the variability of a traffic of a transmission path such as a network.

When the value of the counter N is equal to or greater than the maximum number of repetitions N_{MR}, the device A 205 determines that the device B 210 is not adjacent to the device A 205 itself. On the other hand, when the value of the counter N is less than the maximum number of repetitions N_{MR}, the device A 205 repeats the operations 230 through 265. In other words, the device A 205 generates and encrypts a new random number and transmits the new random number to the device B 210, the device B 210 decrypts the received encrypted random number and transmits the decrypted random number to the device A 205, and the device A 205 determines the RTT by using a point in time when the encrypted random number is transmitted and a point in time when the decrypted random number is received. At this time, when the device B 210 receives a preparation request message RTT_Ready.command from the device A 205 in operation 280, the operation 245 of the device B 210 transmitting the preparation response message RTT_Ready.response is re-performed.

FIG. 3 illustrates a challenge response based RTT checking system according to another exemplary embodiment of the present invention. When the exemplary embodiment of FIG. 2 is implemented in an actual system, if a processor does not have a good arithmetic operating performance, the device B 310 requires much time to calculate the challenge response message RTT_Response(R'). Consequently, the reliability of the RTT checking may degrade.

Accordingly, the exemplary embodiment of FIG. 3 provides a method of minimizing the time required for the device B 310 to calculate the challenge response message RTT_Response, in order to enable even systems having relatively low arithmetic operating performances to perform more accurate RTT checking. Thus, the exemplary embodiment of FIG. 3 provides a method that uses an encoding method which can perform pre-computation.

Referring to FIG. 3, first, an RTT checking apparatus may set to 0 a counter N that is installed in a device A 305 in order to indicate the number of times of RTT checking between the device A 305 and the device B 310, although not shown. Next, the device A 305 generates a random number R and a random number mask R_Mask for encrypting the random number R.

Examples of an encryption algorithm capable of pre-computation used in the exemplary embodiment of FIG. 3 include a stream code (for example, RC4), a CTR mode (for example, AES-CTR), etc. In the present exemplary embodiment, each of the processes of generating a challenge request message and a challenge response message by pre-computation is divided into two operations.

In a preliminary operation for encrypting the random number R, the device A 305 generates the random number R and the random number mask R_Mask. The random number mask R_Mask denotes a random number sequence generated by using the encryption algorithm and an SK that is secretly shared by the devices A and B 305 and 310. The random number R is randomly generated regardless of the SK, whereas the random number mask R_Mask is generated using the SK.

Thereafter, the device A 305 generates a ciphertext by combining the random number mask R_Mask with the random number R according to an XOR operation. In general, it takes much time to generate the random number mask R_Mask. However, according to the present invention, it only takes a very small amount of time to perform an XOR operation.

Then, in operation 330, the RTT checking apparatus encrypts the random number R by combining the random number R with the random number mask R_Mask according to an XOR operation.

Next, in operation 335, the device A 305 transmits a preparation request message RTT_Ready.command for performing an RTT check to the device B 310. In a modified exemplary embodiment, operations 335 and 345 of transmitting/receiving the preparation request message RTT_Ready.command and a preparation response message RTT_Ready.response between the device A 305 and the device B 310 may be omitted.

In a preliminary operation of decrypting an encrypted random number E_{SK}(R) resulting from the encryption of the random number R, the device B 310 generates a random number mask R_Mask, in operation 340. An important feature of the present exemplary embodiment is that the device B 310 should generate the random number mask R_Mask before receiving the challenge request message RTT_Challenge(E_{SK}(R)). For example, the device B 310 may receive the preparation request message RTT_Ready.command from the device A 305 in operation 335 and then generate the random number mask R_Mask by using the SK in operation 340.

After the generation of the random number mask R_Mask, the device B 310 transmits the preparation response message RTT_Ready.response to the device A 305 in operation 345. In a modified exemplary embodiment, the device B 310 may transmit the preparation response message RTT_Ready.response to the device A 305 before the generation of the random number mask R_Mask and may generate the random number mask R_Mask before the reception of the preparation request message RTT_Ready.command.

The device A 305 generates a challenge request message RTT_Challenge(E_{SK}(R)) including the encrypted random number E_{SK}(R), transmits the same to the device B 310 in operation 350, and measures a point in time when the challenge request message RTT_Challenge(E_{SK}(R)) is transmitted.

The device B 310 receives the challenge request message RTT_Challenge(E_{SK}(R)) including the encrypted random number E_{SK}(R) and then combines the random number mask R_Mask with the encrypted random number E_{SK}(R) according to an XOR operation in order to generate a decrypted random number R', in operation 355. Thereafter, in operation 360, the device B 310 generates a challenge response message RTT_Response(R') including the decrypted random number R' and transmits the challenge response message RTT_Response(R') to the device A 305.

The device A 305 receives the challenge response message RTT_Response(R') including the decrypted random number R' from the device B 310 and measures a point in time when the challenge response message RTT_Response(R') is received. The device A 305 can determine an RTT by calculating a period of time ranging from when the device A 305 sends the challenge request message RTT_Challenge(E_{SK}(R)) to the device B 310 to when the device A 305 receives the challenge response message RTT_Response(R') from the device B 310.

As described above, the device B 310 can minimize a period of time from when the device B 310 receives the challenge request message RTT_Challenge(E_{SK}(R)) and when the device B 310 sends the challenge response message RTT_Response(R').

Operations 365 through 380 are similar to the operations 265 through 280 of FIG. 2, so detailed descriptions thereof will be omitted.

FIG. 4 illustrates a challenge response based RTT checking system according to another exemplary embodiment of the present invention. The present exemplary embodiment is the same as the exemplary embodiment of FIG. 3 except that transmission and reception of the preparation request message RTT_Ready.command and the preparation response message RTT_Ready.response between devices A and B is omitted.

If an arithmetic operating performance of a device B 410 is equal to or greater than that of a device A 405, the device A 405 is able to generate a random number mask R_Mask while generating a challenge request message RTT_Challenge(E_{SK}(R)). Thus, transmission and reception of a preparation request message RTT_Ready.command and a preparation response message RTT_Ready.response between the device A 405 and the device B 410 may be omitted.

Accordingly, the device B 410 may generate a random number mask R_Mask in operation 435 before receiving the challenge request message RTT_Challenge(E_{SK}(R)) from the device A 405 in operation 440, and may generate the challenge response message RTT_Response(R') by combining the encrypted random number E_{SK}(R) received from the device A 405 with the generated random number mask R_Mask according to an XOR operation in operation 445.

The remaining operations operate in manners similar to those used in FIGS. 2 and 3, so descriptions thereof will be omitted.

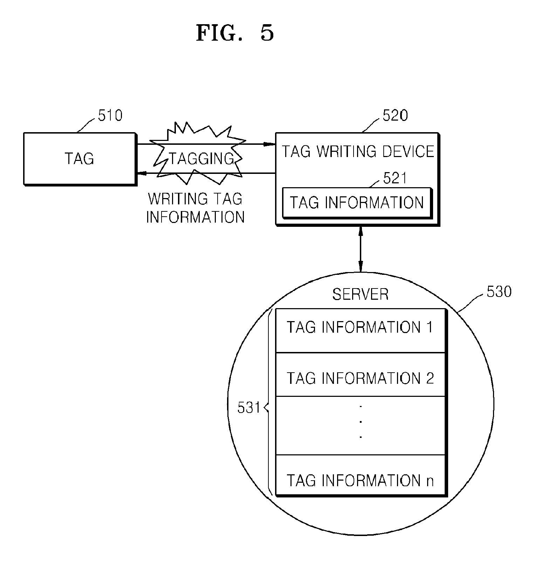

FIG. 5 illustrates a challenge response based RTT checking system according to another exemplary embodiment of the present invention.

In FIGS. 2 through 4, a device A encrypts the random number R and transmits the result of the encryption as the challenge request message RTT_Challenge(E_{SK}(R)), and a device B transmits, as the challenge response message RTT_Response(R'), a decrypted random number R' resulting from the decryption of the encrypted random number E_{SK}(R).

However, in the exemplary embodiment illustrated in FIG. 5, a device A 505 transmits a challenge request message RTT_Challenge(R) including a non-encrypted random number R to a device B 510 in operation 515, and a device B 510 encrypts the random number R included in the challenge request message RTT_Challenge(R) and transmits a result of the encryption as a challenge response message RTT_Response(E_{SK}(R')) in operation 520.

The device A 505 can determine an RTT by measuring a point in time when the challenge request message RTT_Challenge(R) is transmitted and a point in time when the challenge response message RTT_Response(E_{SK}(R')) is received. Measurements are performed within the maximum number of repetitions. In addition, the device A 505 decrypts the received encrypted random number E_{SK}(R') included in the challenge response message RTT_Response(E_{SK}(R')) and compares a result of the decryption with the random number R transmitted to the device B 510, thereby determining whether the device A 505 and the device B 510 are adjacent to each other.

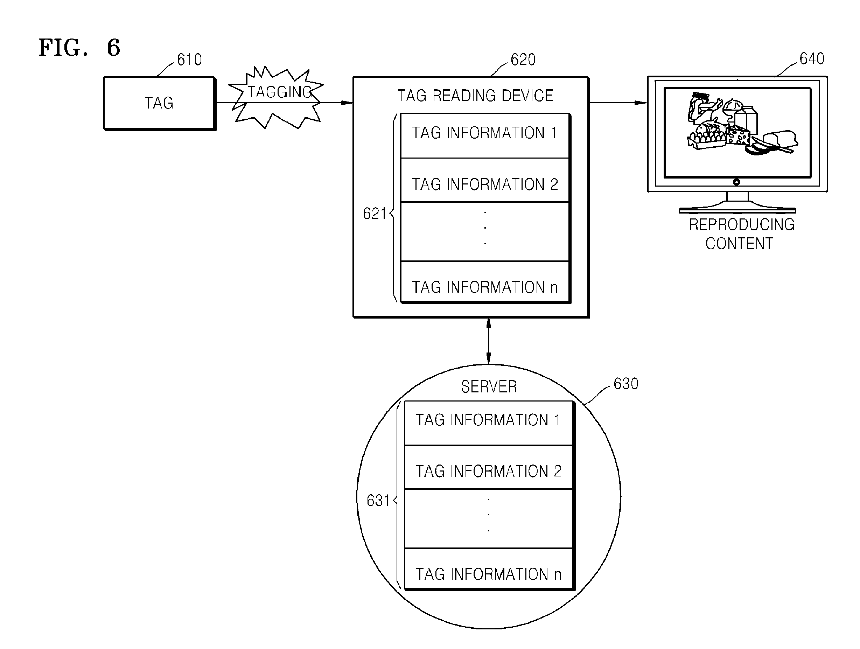

FIG. 6 is a functional block diagram of a challenge response based RTT checking apparatus according to an exemplary embodiment of the present invention. The challenge response based RTT checking apparatus according to the current exemplary embodiment may be included in either a device A 610 or a device B 660. The challenge response based RTT checking apparatus in the former case is referred to as a first RTT checking apparatus, and the challenge response based RTT checking apparatus in the latter case is referred to as a second RTT checking apparatus. The first RTT checking apparatus includes a random number generation unit 615, an encryption unit 620, a communication unit 635, an RTT determination unit 640, and an adjacency determination unit 645.

When RTT checking starts, the random number generation unit 615 generates the random number R.

The encryption unit 620 encrypts the random number R generated in the random number generation unit 615 by using an SK shared by the device A 610 and the device B 660. The encryption unit 620 may include a random number mask generation unit 630 for generating the random number mask R_Mask by using the SK, and a combination unit 625 for combining the random number mask R_Mask with the random number R according to an XOR operation. Generation of the random number mask R_Mask has been described above, so a description thereof will be omitted.

The communication unit 635 transmits the challenge request message RTT_Challenge(E_{SK}(R)) including the encrypted random number E_{SK}(R) to the device B 660, and receives the challenge response message RTT_Response(R') including the decrypted random number R' from the device B 660. Alternatively, the communication unit 635 may transmit the preparation request message RTT_Ready.command to the device B 660 and receive the preparation response message RTT_Ready.response from the device B 660.

The RTT determination unit 640 determines an RTT by measuring a point in time when the challenge request message RTT_Challenge(E_{SK}(R)) is transmitted and a point in time when the challenge response message RTT_Response(R') is received.

The adjacency determination unit 645 may include a comparator 650 for comparing the RTT with a predetermined time limit (TL), and an authenticator 655. The predetermined TL is used to determine whether the device A 610 and the device B 660 are adjacent to each other, and has a predetermined value. TL may have different values according to the circumstances of the user.

When the RTT is less than the TL, the authenticator 655 compares the random number R with the random number R' included in the challenge response message RTT_Response(R') so as to authenticate the device B 660.

Although not shown, when the RTT is equal to or greater than the TL, the comparator 650 may generate a feedback signal for repeating RTT checking within the predetermined Maximum Number of Repetitions and provide the feedback signal to the random number generation unit 615, the random number mask generation unit 630, etc.

The second RTT checking apparatus includes a communication unit 665 and a decryption unit 670.

The communication unit 665 receives the challenge request message RTT_Challenge(E_{SK}(R)) including the encrypted random number E_{SK}(R) from the device A 610. The communication unit 665 transmits the challenge response message RTT_Response(R') including the decrypted random number R' to the device A 610. Alternatively, the communication unit 665 may receive the preparation request message RTT_Ready.command from the device A 610 and transmit the preparation response message RTT.Ready.response to the device A 610.

The decryption unit 670 decrypts the encrypted random number E_{SK}(R) by using the SK so as to generate the random number R'. The decryption unit 670 may include a random number mask generation unit 675 and a combination unit 680.

The random number mask generation unit 675 generates the random number mask R_Mask using the SK before the challenge request message RTT_Challenge(E_{SK}(R)) is received by the communication unit 665.

The combination unit 680 combines the encrypted random number E_{SK}(R) included in the challenge request message RTT_Challenge(E_{SK}(R)) with the random number mask R_Mask according to an XOR operation and outputs a result of the combination to the communication unit 665.

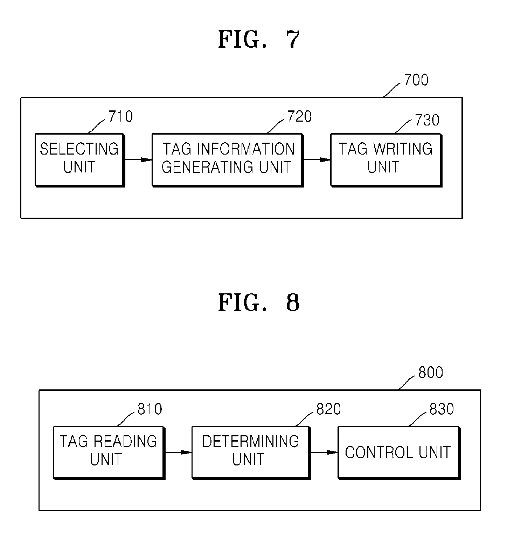

FIG. 7 is a flowchart illustrating a challenge response based RTT checking method according to an exemplary embodiment of the present invention. Referring to FIG. 7, in operation 705, a counter N is set to be 0.

In operation 710, the random number R is generated.

In operation 715, the random number R is encrypted using an SK. The operation 715 of encrypting the random number R may include the sub-operations of generating the random number mask R_Mask by using the SK and combining the random number R with the random number mask R_Mask according to an XOR operation.

In operation 720, the challenge request message RTT_Challenge(E_{SK}(R)) including the encrypted random number E_{SK}(R) is transmitted to a predetermined device, and a point in time when the challenge request message RTT_Challenge(E_{SK}(R)) is transmitted is measured.

In operation 725, the challenge response message RTT_Response(R') including the decrypted random number R' is received from the predetermined device, and a point in time when the challenge response message RTT_Response(R') is received is measured.

In operation 730, an RTT is determined based on a difference between the point in time when the challenge response message RTT_Response(R') is received and the point in time when the challenge request message RTT_Challenge(E_{SK}(R)) is transmitted.

In operation 735, the RTT is compared with a predetermined TL. If it is determined in operation 735 that the RTT is less than the predetermined TL, the random number R is compared with the random number R' included in the challenge response message so as to authenticate the predetermined device, in operation 740. If the random number R is equal to the random number R' included in the challenge response message, the predetermined device is determined to be adjacent to another device with which RTT checking is performed, in operation 745. On the other hand, if the random number R is not equal to the random number R' included in the challenge response message, RTT checking is determined to be a failure, in operation 750.

If it is determined in operation 735 that the RTT is equal to or greater than the predetermined TL, the counter N increases by 1, in operation 755. If it is determined in operation 760 that the counter N is less than a predetermined Maximum Number of Repetitions, the method may be repeated by starting from operation 710. On the other hand, if it is determined in operation 760 that the counter N is equal to or greater than the predetermined Maximum Number of Repetitions, the predetermined device is determined to be not adjacent to another device with which RTT checking is performed, in operation 765.

The challenge response based RTT checking method according to the current exemplary embodiment may further include an operation (not shown) of transmitting the preparation request message RTT_Ready.command to the predetermined device and receiving the preparation response message RTT_Ready.response from the predetermined device.

FIG. 8 is a flowchart illustrating a challenge response based RTT checking method according to another exemplary embodiment of the present invention. Referring to FIG. 8, in operation 810, before the challenge request message RTT_Challenge(E_{SK}(R)) is received, the random number mask R_Mask is generated using an SK.

In operation 820, the challenge request message RTT_Challenge(E_{SK}(R)) including the encrypted random number E_{SK}(R) is received from a predetermined device.

In operation 830, the encrypted random number E_{SK}(R) is decrypted using the SK so as to generate the decrypted random number R'. The encrypted random number E_{SK}(R) included in the challenge request message RTT_Challenge(E_{SK}(R)) may be combined with the random number mask R_Mask according an XOR operation.

In operation 840, the challenge response message RTT_Response(R') including the decrypted random number R' is transmitted to the predetermined device.

The challenge response based RTT checking method according to the current exemplary embodiment may further include an operation (not shown) of receiving the preparation request message RTT_Ready.command from the predetermined device and transmitting the preparation response message RTT_Ready.response to the predetermined device.

According to the exemplary embodiments of the present invention, adjacency between devices can be efficiently checked by applying a challenge response method using an encryption algorithm to RTT checking.

In addition, due to the use of an encryption method capable of pre-computation during RTT checking, a time required to generate a challenge response message is minimized, and the reliability of RTT checking improves.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, etc. The computer readable recording medium can also be distributed over network coupled computer systems so that the computer readable code is stored and executed in a distributed fashion.

While the present invention has been particularly shown and described with reference to exemplary embodiments thereof, it will be understood by those of ordinary skill in the art that various changes in form and details may be made therein without departing from the spirit and scope of the present invention as defined by the following claims.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of checking a round trip time (RTT) based on a challenge response, the method comprising:
generating a random number;
encrypting the random number using a symmetrical key;
transmitting a challenge request message including the encrypted random number to a device;
receiving a challenge response message including the random number from the device which received the challenge request message and decrypted the encrypted random number using the symmetrical key; and
determining an RTT based on a time when the challenge response message is received and a time when the challenge request message is transmitted.

2. The method of claim 1, wherein the encrypting the random number using the symmetrical key comprises:
generating a random number mask using the symmetrical key; and
combining the random number and the random number mask according to an XOR operation.

3. The method of claim 1, further comprising authenticating the device by comparing the random number with the random number included in the challenge response message, if the RTT is less than a time limit.

4. The method of claim 3, wherein if the RTT is equal to or greater than the time limit, the method is repeated up to a maximum number of repetitions.

5. The method of claim 1, further comprising:
transmitting a preparation request message to the device; and
receiving a preparation response message from the device in response to the preparation request message.

6. A method of checking a round trip time (RTT) based on a challenge response, the method comprising:
receiving a challenge request message including an encrypted random number , from a device, wherein the encrypted random number is encrypted using a symmetrical key;
decrypting the encrypted random number using the symmetrical key; and
transmitting a challenge response message including the decrypted random number to the device.

7. The method of claim 6, further comprising, before the receiving the challenge request message, generating a random number mask using the symmetrical key,
wherein the decrypting the encrypted random number comprises combining the encrypted random number included in the challenge request message with the random number mask according to an XOR operation.

8. The method of claim 6, further comprising:
receiving the preparation request message from the device; and
transmitting the preparation response message from the device in response to the preparation request message.

9. An apparatus for checking a round trip time (RTT) based on a challenge response, the apparatus comprising:
a random number generation unit (615) which generates a random number;
an encryption unit (620) which encrypts the random number using a symmetrical key;
a communication unit (635) which transmits a challenge request message including the encrypted random number to a device, and receives a challenge response message including the random number from the device which received the challenge request message and decrypted the encrypted random number using the symmetrical key; and
an RTT determination unit (640) which determines an RTT based on a time when the challenge response message is received and a time when the challenge request message is transmitted.

10. The apparatus of claim 9, wherein the encryption unit (620) comprises:
a random number mask generation unit (630) which generates a random number mask using the symmetrical key; and
a combination unit (625) which combines the random number and the random number mask according to an XOR operation.

11. The apparatus of claim 9, further comprising:
a comparison unit (650) which compares the RTT with a time limit; and
an authentication unit (655) which authenticates the device by comparing the random number with the random number included in the challenge response message if the RTT is less than the time limit.

12. Am apparatus for checking a round trip time (RTT) based on a challenge response, the apparatus comprising:
a communication unit (665) which receives a challenge request message including an encrypted random number which is encrypted using a symmetrical key, from a device; and
a decryption unit (670) which decrypts the encrypted random number using the symmetrical key,
wherein the communication unit transmits a challenge response message including the decrypted random number to the device.

13. The apparatus of claim 12, wherein the decryption unit (670) comprises:
a random number mask generation unit (675) which generates a random number mask using the symmetrical key before the communication unit (665) receives the challenge request message; and
a combination unit (680) which combines the encrypted random number included in the challenge request message with the random number mask according to an XOR operation.

14. A computer recording medium having recorded thereon a program for a method for checking a round trip time (RTT) based on a challenge response, the method comprising:
generating a random number;
encrypting the random number using a symmetrical key;
transmitting a challenge request message including the encrypted random number to a device;
receiving a challenge response message including the random number from the device which received the challenge request message and decrypted the encrypted random number using the symmetrical key; and
determining an RTT based on a time when the challenge response message is received and a time when the challenge request message is transmitted.

15. A computer recording medium having recorded thereon a program for a method for checking a round trip time (RTT) based on a challenge response, the method comprising:
receiving a challenge request message including an encrypted random number which is encrypted using a symmetrical key, from a device;
decrypting the encrypted random number using the symmetrical key; and
transmitting a challenge response message including the decrypted random number to the device.
